(19) Europäisches Patentamt

European Patent Office

Office européen des brevets

(11) Numéro de publication : **0 488 917 A1**

(12) **DEMANDE DE BREVET EUROPEEN**

(21) Numéro de dépôt : 91440091.6

(22) Date de dépôt : 12.11.91

(51) Int. Cl.$^5$ : **B01D 45/02**, B23Q 11/12

(30) Priorité : 27.11.90 FR 9014981

(43) Date de publication de la demande :
03.06.92 Bulletin 92/23

(84) Etats contractants désignés :
AT BE CH DE DK ES GB IT LI NL SE

(71) Demandeur : FERCO INTERNATIONAL Usine
de Ferrures de Bâtiment Société à
responsabilité limitée
2, rue du Vieux-Moulin Reding
F-57400 Sarrebourg (FR)

(72) Inventeur : Kautt, Jean-Jacques
24, rue Pertois
F-67000 Strasbourg (FR)

(74) Mandataire : Aubertin, François
Cabinet Lepage & Aubertin Innovations et
Prestations 4, rue de Haguenau
F-67000 Strasbourg (FR)

(54) Machine automatique pour l'assemblage ou l'usinage de pièces comprenant des vérins pneumatiques et une installation defiltrage du mélange air-lubrifiant d'échappement.

(57) Une machine automatique pour l'assemblage ou l'usinage de pièces comporte des outils manoeuvrés par l'intermédiaire de vérins pneumatiques (13) alimentés par un mélange d'un fluide gazeux et d'un fluide liquide et fixés sur un bâti (2) constitué, au moins en partie, par un assemblage de profilés tubulaires (9, 10, 11).

En vue d'éviter la pollution de l'air ambiant, mais aussi pour diminuer le bruit de fonctionnement de la machine le mélange fluide gazeux -fluide liquide en provenance du ou des vérins pneumatiques (13) est évacué, au travers de conduites appropriées (19, 20) dans la partie interne (21) du ou des profilés tubulaires (9, 10, 11) du bâti (2) lesdits profilés tubulaires (9, 10, 11) constituant des chambres de décompression et de séparation du fluide liquide contenu dans ledit mélange en provenance des vérins pneumatiques (13).

FIG. 1

Jouve, 18, rue Saint-Denis, 75001 PARIS

La présente invention est relative à une machine automatique pour l'assemblage ou l'usinage de pièces, conforme au préambule de la revendication 1.

La présente invention trouvera son application dans le domaine des machines automatiques employant en tant qu'organes pour manoeuvrer des outils ou autres, des vérins pneumatiques, c'est-à-dire alimentés par un fluide gazeux et, généralement, par de l'air sous pression auquel est habituellement mélangé un fluide liquide ayant pour fonction la lubrification des pièces en mouvement de ces vérins pneumatiques.

En fait, dans le domaine industriel, il est de plus en plus fréquent de faire appel à des machines automatisées pour procéder, soit à l'assemblage, soit à l'usinage de pièces en grande série.

En effet, de telles machines automatisées permettent, fréquemment, d'obtenir un coût de revient amoindri de ces pièces ainsi conçues sans compter qu'elles conduisent, en outre, à une productivité largement supérieure.

Ce type de machine automatisée emploie en tant qu'organes pour manoeuvrer des outils d'usinage ou d'assemblage des vérins de type hydraulique ou pneumatique. Ces derniers sont, cependant employés de manière plus fréquente que les précédents, en raison, notamment, de leur facilité d'emploi. Ainsi, si dans le cadre de vérins hydrauliques, il est nécessaire de recycler systématiquement le fluide ayant servi à leur commande, cette obligation ne se retrouve pas au niveau des vérins pneumatiques. Le fluide qu'emploient ces derniers se compose, généralement, d'un mélange d'un fluide gazeux et d'un fluide liquide, très fréquemment, il s'agit d'un mélange air-lubrifiant qui est, jusqu'à présent, rejeté dans l'atmosphère environnante. En conséquence, l'emploi de tels vérins pneumatiques représente un encombrement moindre au niveau de ces machines automatisées étant donné qu'ils dispensent l'utilisation d'un réseau complexe de recyclage du fluide de commande.

Toutefois, il convient de remarquer que cette évacuation dans l'atmosphère environnante du mélange, par exemple, air-lubrifiant n'en présente pas moins un certain nombre d'inconvénients qui consistent, bien évidemment, en ce que cela entraîne une pollution de type agressif. Plus exactement, cette pollution peut provoquer, non seulement des dépôts parasites sur des pièces et autres composants se trouvant aux alentours de l'unité de production, mais encore des indispositions chez les personnes travaillant dans ce milieu.

Un autre inconvénient réside dans le fait qu'il est indispensable d'assurer un renouvellement fréquent de l'air dans ces locaux de production où sont implantées ces machines automatisées à vérins pneumatiques. Ceci se traduit, en quelque sorte par des extracteurs de forte puissance et des déperditions importantes de chaleur.

Un autre inconvénient, qui n'est pas des moindres et qu'il ne convient, en aucun cas, de négliger, est le bruit de fonctionnement de ces vérins pneumatiques, bruit produit par l'évacuation du mélange comprimé air-lubrifiant suite à chacune des commandes de ces vérins pneumatiques.

En fait, on connaît déjà notamment par le document US-A-2.894.599 un dispositif d'échappement et séparateur d'huile. Ainsi, ce dispositif a pour but d'assurer la séparation d'un fluide liquide contenu, sous forme de vapeur dans un gaz servant de fluide véhiculant. Ce mélange fluide liquide - fluide gazeux peut correspondre aux gaz d'échappement d'un certain nombre d'appareils tels que compresseurs, vérins pneumatiques ou autres.

Ce dispositif se présente, en fait, sous forme d'un contenant cylindrique comportant une ouverture d'arrivée du mélange fluide gazeux - fluide liquide, à l'intérieur de ce contenant étant disposé un certain nombre de chicanes ainsi qu'un filtre permettant de retenir les particules de fluide liquides quine se seraient pas condensés au passage des chicanes, ceci avant l'évacuation dans l'atmosphère du fluide gazeux.

En cas d'application de ce dispositif à une machine automatique pour l'assemblage ou l'usinage de pièces, faisant appel à des vérins pneumatiques, il serait nécessaire, soit de prévoir autant de dispositifs que de vérins pneumatiques, soit de relier individuellement chacun de ces derniers à un tel dispositif de séparation et de filtration. Or, dans chacun de ces cas de figure, l'on rencontre les problèmes d'encombrement au niveau de la machine d'assemblage ou d'usinage soit en raison de la multiplicité des dispositifs nécessaires, soit dû au réseau complexe de conduite de récupération et de recyclage du mélange fluide gazeux - fluide liquide.

En outre, l'on notera qu'étant donné que le dispositif sert, également, de chambre de décompression du mélange fluide gazeux - fluide liquide, il doit être de dimension importante.

Ainsi, la présente invention a pour but de remédier à l'ensemble des inconvénients précités en proposant d'utiliser des moyens préexistants au niveau de ces machines automatisées pour, d'une part, recueillir le mélange air-lubrifiant et, en général, tout mélange d'un fluide gazeux et d'un fluide liquide s'échappant au niveau de chacun des vérins pneumatiques suite à leur commande et, d'autre part, pour procéder à la séparation du fluide liquide contenu dans le fluide gazeux afin de pouvoir laisser s'échapper ce dernier dans l'atmosphère ambiante, sans qui'il n'y ait de conséquence nuisible pour l'environnement.

De plus et selon l'invention, il est préconisé d'adjoindre à ces moyens préexistants au niveau de la machine automatisée d'éventuels moyens de filtration complémentaires, au travers desquels il sera possible de récupérer le fluide liquide tout en obtenant une qualité de fluide gazeux susceptible d'être rejeté dans l'atmosphère, car totalement déchargé de composés nocifs.

L'invention telle qu'elle est caractérisée dans les revendications, résout le problème et consiste en une machine automatique pour l'assemblage ou l'usinage de pièces, comprenant un bâti formé par une ossature constituée, au moins en partie, par des profilés tubulaires, ce bâti servant de support, notamment, à une table ou à un plateau de transfert amenant les pièces au droit des outils correspondant aux différents postes d'assemblage ou d'usinage, certains de ces outils étant manoeuvrés par l'intermédiaire de vérins pneumatiques alimentés par un mélange sous pression d'un fluide gazeux et d'un fluide liquide, caractérisée par le fait que ledit mélange en provenance du ou des vérins pneumatiques est évacué, au travers de conduites appropriées, dans la partie interne du ou des profilés tubulaires du bâti, lesdits profilés tubulaires constituant des chambres de décompression et de séparation du fluide liquide contenu dans ce mélange en provenance des vérins pneumatiques.

Selon une autre caractéristique de la présente invention, des moyens de filtration du fluide gazeux et de récupération du fluide liquide sont solidaires desdits profilés tubulaires recueillant le mélange fluide gazeux- fluide liquide en provenance des vérins pneumatiques.

Les avantages obtenus grâce à cette invention consistent, essentiellement, en ce qu'en employant le bâti même de la machine automatisée en tant que chambre de récupération du mélange fluide gazeux-fluide liquide s'échappant des vérins pneumatiques, on évite, bien évidemment, le rejet direct dans l'atmosphère ambiante et, finalement, la pollution produite par ces machines automatisées. De plus, on réduit considérablement, le bruit de fonctionnement de ces dernières et on améliore les conditions de travail en préservant l'environnement des effets néfastes de ces rejets bruyants. On notera, plus particulièrement, que ces résultats sont obtenus sans l'implantation d'un réseau complexe de conduites de récupération et de recyclage de ce mélange fluide gazeux-fluide liquide, tel que ceci est nécessaire, à l'heure actuelle, pour les vérins hydrauliques.

En fait, la solution, conforme à l'invention est particulièrement intéressante en ce qu'elle permet de remédier aux inconvénients connus jusqu'à présent grâce à des moyens simples, préexistants et, par conséquent, peu coûteux.

L'invention est exposée ci-après plus en détail à l'aide de dessins représentant seulement un mode d'exécution.

– la figure 1 est une vue schématisée et en perspective d'une machine automatisée comprenant, en tant que moyens de manipulation des outils d'usinage ou d'assemblage de pièces, des vérins pneumatiques ;

– la figure 2 est une représentation schématisée et en coupe des moyens de filtration associés à un profilé tubulaire correspondant au bâti et dans lequel est injecté le mélange fluide gazeux-fluide liquide s'échappant au niveau des vérins pneumatiques.

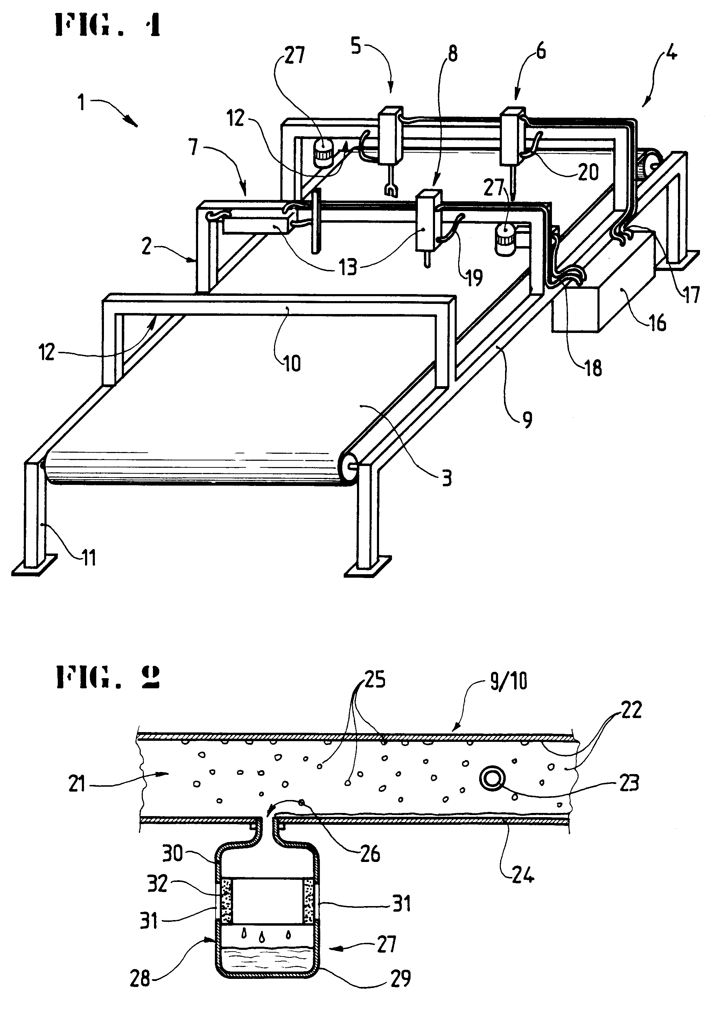

Telle que représentée dans la figure 1 du dessin joint en annexe, la présente invention est relative à une machine automatique 1 destinée, par exemple, à l'assemblage ou encore à l'usinage de pièces dont la nature et les caractéristiques peuvent être quelconques et, de ce fait, n'ont pas été représentées sur cette figure 1.

Ainsi, cette machine automatique 1 comporte, un bâti 2 se présentant, habituellement, sous forme d'une ossature, servant notamment de support à une table ou un plateau de transfert 3. Plus précisément, la fonction de cette dernière consiste à véhiculer les pièces, depuis un poste d'alimentation situé en amont 4 de la machine automatique 1, sous les différents postes d'assemblage ou d'usinage 5, 6, 7, 8.

Cette ossature constituant le bâti 2 de cette machine automatique 1 est constituée, au moins en partie, par un assemblage de profilés tubulaires 9, 10, 11 dont certains formant les longerons se situant de part et d'autre de ladite machine, d'autres constituants des poteaux supports ou encore des portiques 12 venant à s'étendre au-dessus de la table ou du plateau de transfert 3. Sur ces portiques 12 peuvent, éventuellement, être fixés les moyens d'assemblage et d'usinage desdites pièces.

Plus particulièrement, de tels moyens d'assemblage ou d'usinage sont constitués, substantiellement, par des outils aux fonctions bien déterminées qui viennent à être manoeuvrés au travers de vérins pneumatiques 13 éventuellement fixés sur de tels portiques 12 ou si nécessaire à tout autre endroit de l'ossature correspondant au bâti 2.

En fait, ces vérins pneumatiques 13 sont alimentés, au travers d'une unité d'alimentation centrale 16, par un fluide sous pression qui est constitué, préférentiellement, par un mélange d'un fluide gazeux et d'un fluide liquide. Plus précisément, au niveau de l'unité d'alimentation centrale 16 il est pulvérisé, dans le fluide gazeux sous pression, qui est très fréquemment de l'air, un fluide liquide et, notamment, un lubrifiant se présentant, alors, sous forme de brouillard ayant pour fonction bien précise, de lubrifier, ultérieurement, les éléments mécaniques correspondant auxdits vérins pneumatiques 13.

Dans la suite de la description, il est fait état, d'une manière systématique, d'un mélange air-lubrifiant. Toutefois, cette précision ne doit pas être comprise comme limitation de la présente invention puisqu'elle n'a pour but que de faciliter la compréhension de cette description.

Ainsi, l'alimentation des vérins pneumatiques 13 s'obtient au travers de conduites appropriées 17, 18 s'étendant le long des profilés tubulaires 9, 10, 11, correspondant à l'ossature du bâti 2.

De manière à ne pas nuire à l'environnement et, en outre, en vue de diminuer le bruit de fonctionnement de la machine automatique 1, dû aux vérins pneumatiques 13, le mélange air-lubrifiant s'échappant de ces derniers, suite à leur commande, est injecté, au travers de conduites 19, 20 distinctes et selon une caractéristique de la présente invention, dans la partie interne 21 de certains desdits profilés tubulaires 9, 10, 11 tel que ceci est représenté dans la figure 2.

Les avantages découlant d'une telle disposition en-dehors d'une réduction du bruit correspondant à l'échappement du mélange air-lubrifiant au niveau des vérins pneumatiques 13, consistent en ce que sous l'effet de la décompression se produisant dans les profilés tubulaires 9, 10, 11 du bâti 2, l'on obtient une première séparation du lubrifiant contenu dans l'air, cet air étant, ainsi, d'un degré polluant largement diminué.

En fait, cette précipitation et condensation du lubrifiant le long des parois internes 22 correspondant à un profilé tubulaire 9, 10, 11 sont dues à la baisse de pression s'opérant au moment où ce mélange air-lubrifiant vient à déboucher dans ce dernier, au travers d'ouvertures 23 appropriées et avec lesquelles communiquent les conduites 19, 20 canalisant le mélange air-lubrifiant en sortie d'un vérin pneumatique 13. A noter, en outre, qu'en raison de la taille importante de ces profilés tubulaires 9, 10, 11, ils offrent une surface d'échange particulièrement intéressante ce qui favorise, largement, la séparation du lubrifiant de l'air.

Telles que représentées dans la figure 2, les gouttelettes 24 de lubrifiant venant à adhérer ou à condenser le long des parois internes 22 d'un profilé tubulaire horizontal 9, 10 auront tendance, finalement à s'écouler vers le bas et à s'accumuler sur la paroi inférieure 24 de ces profilés tubulaires 9, 10.

Il convient de noter que dans le cadre d'un profilé tubulaire 11 disposé verticalement, le lubrifiant venant à condenser le long de ses parois internes, s'écoule, évidemment, jusqu'à l'extrémité inférieure dudit profilé.

L'air, ainsi débarrassé en grande partie du lubrifiant, peut alors rejoindre directement l'atmosphère, ceci au travers d'une ouverture appropriée au niveau du profilé tubulaire 9, 10, 11.

Quant au lubrifiant, celui-ci peut, être recueilli au moyen d'un réservoir de réception disposé au-dessous d'une ouverture 26 pratiquée dans la paroi inférieure 24 ou selon le cas, à l'extrémité inférieure d'un tel profilé tubulaire 9, 10, 11.

Il est certain que l'air regagnant directement l'atmosphère, en sortie d'un profilé tubulaire correspondant au bâti 2, peut, encore, être chargé de particules de lubrifiant qui, bien qu'étant réduites à une faible densité n'en présentent pas moins une pollution pour l'atmosphère environnante.

Aussi, il est prévu, selon une autre caractéristique de la présente invention, d'équiper les profilés tubulaires 9, 10, 11 dans lesquels est injecté le mélange air-lubrifiant en sortie des vérins pneumatiques 13 de moyens 27 ayant pour fonction, d'une part, la filtration de l'air avant de le laisser regagner l'atmosphère et, d'autre part, recueillir le lubrifiant s'étant préalablement condensé dans ces profilés tubulaires 9, 10, 11.

Selon un mode de réalisation préférentiel, ces moyens de filtration 27 sont implantés au-dessous de l'ouverture 26 pratiquée, soit au niveau de la paroi inférieure 24 d'un profilé tubulaire horizontal 9, 10, soit à l'extrémité inférieure d'un profilé 11 disposé verticalement, ouverture 26 servant, normalement, à recueillir le lubrifiant s'étant séparé de l'air suite à la décompression.

Ainsi, ces moyens de filtration 27 sont constitués par un contenant 28 dans le fond 29 duquel s'écoule ledit lubrifiant, ce contenant 28 comportant, en outre, au niveau de ses parois périphériques 30, des ouvertures 31 au travers desquelles vient à s'échapper l'air déchargé du lubrifiant. Plus précisément, au droit de ces ouvertures 31 aménagées dans le contenant 28 et dans la partie interne de ce dernier est disposé un filtre 32 qui peut être, soit synthétique, soit de nature cellulosique, mais qui, dans tous les cas, permettra de retenir le lubrifiant contenu dans l'air pour ne laisser passer ce dernier que sous une forme non polluante.

Il convient de noter qu'en raison de cette disposition et en cas de saturation du filtre 32, le lubrifiant pourra, naturellement, s'écouler dans le fond 29 du contenant 28.

Dans le cadre du mode de réalisation illustré dans la figure 1 et correspondant à un exemple de machine automatique 1, les moyens de filtration 27 ne sont associés qu'aux profilés tubulaires horizontaux 10 correspondant aux portiques 12. Toutefois, il est bien évident que de tels moyens de filtration 27 pourront, également, prendre place au-dessous de l'extrémité inférieure d'un profilé tubulaire 11 en disposition verticale ou le long des profilés 9 correspondant aux longerons.

Selon l'invention, il est, encore, préconisé d'isoler un profilé tubulaire, dans lequel vient à être injecté le mélange air-lubrifiant en sortie des vérins pneumatiques 13, ceci par rapport aux autres profilés composant l'ossature du bâti 2. En fait, une telle caractéristique a pour but essentiel de faciliter la récupération du lubrifiant condensé dans ledit profilé en évitant notamment, la dispersion de ce lubrifiant dans l'ensemble du bâti.

Par ailleurs, en ce qui concerne plus particulièrement les moyens de filtration 27, bien qu'il en ait été décrit, ci-dessus, un mode de réalisation spécifique, la présente invention ne se limite nullement à un tel mode de réalisation sachant qu'au travers desdits moyens de filtration l'objectif principal à atteindre consiste à recueillir, finalement, le lubrifiant pour ne laisser s'échapper que l'air déchargé d'agent polluant.

Les avantages essentiels obtenus grâce à cette invention consistent en ce que l'on obtient une machine automatique dont le bruit de fonctionnement est considérablement réduit et qui s'avère finalement, non polluante malgré l'usage de vérins pneumatiques fonctionnant à base d'un mélange d'un fluide gazeux et d'un fluide liquide. Ces avantages ont d'autant plus d'intérêt qu'ils sont obtenus au-travers d'une installation des plus simplifiées puisque employant, en grande partie, des moyens préexistants au niveau de toutes ces machines automatiques 1.

**Revendications**

1. Machine automatique pour l'assemblage ou l'usinage de pièces comprenant un bâti (2) formé par une ossature constituée, au moins en partie, par des profilés tubulaires (9, 10, 11), ce bâti (2) servant de support, notamment, à une table ou à un plateau de transfert (3) amenant les pièces au droit des outils correspondant aux différents postes d'assemblage ou d'usinage (5 à 8) certains de ces outils étant manoeuvrés par l'intermédiaire de vérins pneumatiques ( 13 ) alimentés par un mélange sous pression d'un fluide gazeux et d'un fluide liquide, caractérisée par le fait que ledit mélange en provenance du ou des vérins pneumatiques (13) est évacué, au travers de conduites appropriées (19, 20) dans la partie interne (21) du ou des profilés tubulaires (9, 10, 11) du bâti (2) lesdits profilés tubulaires (9, 10, 11) constituant des chambres de décompression et de séparation du fluide liquide contenu dans ce mélange en provenance des vérins pneumatiques (13).

2. Machine automatique selon la revendication 1, caractérisée par le fait que les conduites (19, 20), au travers desquelles s'échappe le mélange fluide gazeux-fluide liquide en sortie des vérins pneumatiques (13) communiquent, chacune, avec la partie interne des profilés tubulaires (9, 10, 11), au travers d'ouvertures (23) pratiquées dans ces derniers.

3. Machine automatique selon la revendication 1, caractérisée par le fait que le ou les profilés tubulaires (9, 10, 11) correspondant au bâti (2) et dans lesquels est injecté le mélange fluide gazeux-fluide liquide en provenance des vérins pneumatiques (13) comportent au moins une ouverture (26) au travers de laquelle peut d'une part, s'échapper le fluide gazeux et, d'autre part, s'écouler le fluide liquide qui s'est, préalablement, déposé le long des parois internes (22) du ou des profilés tubulaires (9, 10, 11).

4. Machine automatique selon la revendication 3, caractérisée par le fait que le ou les profilés tubulaires (9, 10, 11) comportent une seule ouverture (26) au travers de laquelle peut s'échapper le liquide gazeux et s'écouler le fluide liquide, cette ouverture (26) étant pratiquée, soit dans la paroi inférieure (24) en cas d'un profilé tubulaire (9, 10) disposé horizontalement ou sensiblement horizontalement, soit à l'extrémité inférieure de ce profilé tubulaire (11) lorsqu'il est en position verticale.

5. Machine automatique selon la revendication 1, caractérisée par le fait que le ou les profilés tubulaires (9, 10, 11) dans lequels est injecté le mélange fluide gazeux-fluide liquide en sortie des vérins pneumatiques (13) sont équipés de moyens de filtration (27), pour, d'une part, filtrer le fluide gazeux avant de le laisser regagner l'atmosphère et, d'autre part, recueillir le fluide liquide s'étant préalablement condensé dans ce ou ces profilés tubulaires (9, 10, 11).

6. Machine automatique selon les revendications 4 et 5 caractérisée par le fait que les moyens de filtration (27) sont implantés au-dessous de l'ouverture (26) pratiquée dans un profilé tubulaire (9, 10, 11) et servant de passage au fluide gazeux et au fluide liquide.

7. Machine automatique selon les revendications 5 et 6 caractérisée par le fait que les moyens de filtration (27) sont constitués par un contenant (28) dans le fond (29) duquel s'écoule le fluide liquide, ce contenant (28) comportant, au niveau de ses parois périphériques (30), des ouvertures (31) au travers desquelles est en mesure de s'échapper le fluide gazeux déchargé de fluide liquide.

8. Machine automatique selon la revendication 7, caractérisée par le fait qu'au droit des ouvertures (31) aménagées dans le contenant (28) et dans la partie interne de ce dernier est disposé un filtre (32) susceptible de retenir le fluide liquide encore contenu dans le fluide gazeux s'échappant d'un profilé tubulaire (9, 10, 11).

# FIG. 1

# FIG. 2

Office européen
des brevets

**RAPPORT DE RECHERCHE EUROPEENNE**

Numero de la demande

EP    91 44 0091

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | US-A-2894599 (SYLVAN V. LEININGER) <br> * le document en entier * <br> --- | 1-8 | B01D45/02 <br> B23Q11/12 |
| A | DE-A-1625888 (AMSTUTZ, LEVIN & CIE) <br> * revendications 1-7; figure 1 * <br> --- | 1-3, 7 | |
| A | EP-A-83943 (NAKAMURATOME SEIMITSU ET AL.) <br> * abrégé; figures 5, 6 * <br> ----- | 1-3 | |
| | | | **DOMAINES TECHNIQUES RECHERCHES (Int. Cl.5)** <br><br> B01D <br> B23Q |

Le présent rapport a été établi pour toutes les revendications

| Lieu de la recherche | Date d'achèvement de la recherche | Examinateur |
|---|---|---|
| BERLIN | 14 JANVIER 1992 | CUNY J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)